# EUROPÄISCHE PATENTSCHRIFT

(11) **EP 0 396 148 B1**
(45) Veröffentlichungstag und Bekanntmachung des Hinweises auf die Patenterteilung: **23.08.1995**
(21) Anmeldenummer: 90108460.8
(22) Anmeldetag: 04.05.1990
(51) Int. Cl.: A22B 3/06

(54) **Schlachttier-Betäubungsbox**
Box for stunning animals to be slaughtered
Cage pour anesthésier des animaux de boucherie

(30) Priorität: 05.05.1989 DE 3914901
(43) Veröffentlichungstag der Anmeldung: 07.11.1990
(73) Patentinhaber: Banss Maschinenfabrik GmbH & Co. KG, D-35216 Biedenkopf (DE)
(72) Erfinder: Engelbach, Volker, D-3560 Biedenkopf-Eckelshausen (DE); Runkel, Gerhard, D-6341 Angelburg-Gönnern (DE); Müller, Hans Martin, D-3563 Dautphetal 3 - Holzhausen (DE)
(74) Vertreter: Klunker . Schmitt-Nilson . Hirsch

(56) Entgegenhaltungen:
- EP-A- 0 225 149
- NL-A- 7 514 368
- US-A- 3 081 483
- US-A- 3 135 017

## Beschreibung

Die Erfindung bezieht sich auf eine Betäubungsbox für das elektrische Betäuben von Schlachttieren, insbesondere Schweinen, aufweisend eine Immobilisierungseinrichtung, mit der sich ein in der Betäubungsbox befindliches Schlachttier durch seitliches Einklemmen immobilisieren läßt, und einen sich verjüngend begrenzten Aufnahmeraum für den Kopf eines in der Betäubungsbox befindlichen Schlachttiers.

In Schlachthöfen mit hoher Stundenleitung wird heutzutage zumeist eine automatische Betäubungsanlage mit einem Restrainer eingebaut. Die hierfür erforderlichen Investitionskosten sind in Schlachthöfen mit nicht so hoher Stundenleistung nicht vertretbar. Demgegenüber lassen sich Betäubungsboxen mit geringerem Investitionsaufwand realisieren.

Eine Betäubungsbox für Schweine mit den eingangs aufgeführten Merkmalen ist aus dem Dokument US-A-3 081 483 bekannt. An ihrem hinteren Ende weist die bekannte Betäubungsbox einen Abschluß nach Art einer zweiflügeligen Tür auf, die zum Hereinlassen eines Schlachttiers geöffnet und hinter dem in der Betäubungsbox befindlichen Schlachttier geschlossen wird.

Aus dem Dokument NL-A-7 514 368 ist eine Betäubungsbox für Schweine bekannt, bei der ein trichterartiges Bauteil mit Elektroden in Längsrichtung des Schweinekörpers verfahrbar ist, um die Elektroden an den Kopf des Schweins zur Anlage zu bringen.

Die erfindungsgemäße Betäubungsbox ist dadurch gekennzeichnet, daß sie außerdem eine mechanisierte Vorwärtsdrängeinrichtung aufweist, mit der sich ein in der Betäubungsbox befindliches Schlachttier ganz nach vorn in die Betäubungsposition drangen läßt, ehe die Immobilisierungseinrichtung betätigt wird.

Bei der erfindungsgemäßen Betäubungsbox wird der Kopf des jeweiligen Schlachttiers in eine standardisierte Position gebracht, die von Schlachttier zu Schlachttier nur wenig unterschiedlich ist. Dies im verein mit der verbesserten Immobilisierung führt dazu, daß der Betäuber die Elektroden für die elektrische Betäubung stets an etwa gleicher Stelle in Ruhe ansetzen kann, ohne daß das Schlachttier wesentliche Ausweichbewegungen vollführen kann. Besonders geeignete Stellen für das Ansetzen der Elektroden ist der Bereich jeweils oberhalb eines Auges des Schlachttieres, so daß der Betäubungsstrom auf kürzestem Weg durch das Gehirn des Schlachttiers geleitet wird. Bei der erfindungsgemäßen Betäubungsbox hat der Betäuber ein vergleichsweise leichtes, angenehmes Arbeiten.

Bevorzugte Ausgestaltungen der Erfindung sind in den Ansprüchen 2 bis 17 angegeben. Die in diesen Ansprüchen angegebenen Maßnahmen werden weiter unten im Zusammenhang mit dem Ausführungsbeispiel noch näher erläutert. Zu einigen Ausgestaltungsmerkmalen werden nachfolgend noch weitere Ausführungen gemacht.

Die Maßnahme des Anspruchs 11 führt dazu, daß das Schlachttier nicht das Gefühl hat, mit seinem Kopf in einen dunklen, höhlenartigen Bereich zu kommen, wovor es naturgemäß zurückschrecken würde.

Durch die Maßnahme des Anspruchs 12 bleibt dem Betäuber ein freies Arbeitsfeld zum bequemen Ansetzen der Elektroden.

In den Ansprüchen 7 und 8 sind bevorzugte, der Abschlußwand zugeordnete Mittel zum effektiven Nach-vorn-Drängen des Schlachttiers angegeben. Der Begriff "Schrägfläche" ist funktionell in dem Sinne zu verstehen, daß beim Einfahren der Abschlußwand - beispielsweise die Lage der zentralen Längsachse der Betäubungsbox betrachtet - der Boxraum immer weiter verkürzt wird. Hierfür muß die Schrägfläche keineswegs unbedingt ebenflächig-schräg sein, sondern kann beispielsweise auch gewölbt oder ein Stück schrägverlaufend und dann rechtwinklig zur Betäubungsbox-Längsachse verlaufend gestaltet sein.

Die zweite Abschlußwand gemäß Anspruch 9 hat den Zweck, für besonders große Schlachttiere eine hierauf abgestimmte Abschlußwand zur Verfügung zu stellen.

Es wurde beobachtet, daß die Schlachttiere häufig vor dem vollständigen Hineingehen in die Betäubungsbox zurückschrecken, wenn sie vor sich die Person des Betäubers sehen. Es ist deshalb eine besonders wesentliche, durch die Erfindung geschaffene Maßnahme, die Arbeitsposition der Bedienungsperson der Betäubungsbox derart vorzusehen, daß das Schlachttier die Bedienungsperson beim Hineingehen in die Betäubungsbox und/oder zu Beginn des Betäubungsvorgangs praktisch nicht sieht. Bevorzugte konkrete Lösungen hierfür ist eine Arbeitsposition des Betäubers entweder auf einer Bühne oberhalb zumindest des Vorderteils des Schlachttierkopfes oder leicht zurückgesetzt seitlich des Schlachttierkopfes.

Auch die Maßnahme des Anspruchs 15, weitergebildet durch die Merkmale des Anspruchs 16, stellen besonders wesentliche, durch die Erfindung geschaffene Maßnahmen dar. Durch das eine geeignete Länge aufweisende Handhabungsteil gewinnt der Betäuber eine im Sinne der Unfallverhütungsvorschriften wünschenswert Abstand von dem Ansetzbereich der Elektroden am Schlachttier unter den nassen Schlachthofbedingungen. Die am weitesten gehende Stufe der Entwicklung wird dabei durch ein mechanisiertes Ansetzen der Elektroden mittels eines dafür vorgesehenen Antriebs erreicht. Sowohl für das manuelle Ansetzen mittels eines Handhabungsteils als auch für das mechanisierte Ansetzen der Elektroden sind die erfindungsgemäße Kopfpositionierung und Immobilisierung des Schlachttiers günstige Voraussetzungen.

Einen noch weitergehenden Schritt der Teilautomatisierung oder Vollautomatisierung der Betäubungsbox stellt das Vorsehen einer Steuerung für deren Betriebsablauf dar, wobei diese Steuerung auf Signale mindestens einer Lichtschranke oder eines Lichtschleiers anspricht, die bzw. der die jeweilige Position des Schlachttiers erfaßt, beispielsweise durch ein Signal für die Position der Schlachttierschnauze.

Die erfindungsgemäße Betäubungsbox ist, selbst bei technisch höchstem Ausrüstungsstand, deutlich preisgünstiger als eine automatische Betäubungsanlage mit Restrainer. Schlachtleistungen von über 150 Schlachttieren pro Stunde, sogar bis 300 Schlachttieren pro Stunde, sind ohne weiteres erreichbar.

Es ist möglich, die erfindungsgemäße Betäubungsbox für quasi-automatischen Betrieb auszustatten. Als weiteres bevorzugtes Beispiel wird die Auslösung der dann mechanisiert ablaufenden Ansetzbewegung und der anschließenden, gegebenenfalls automatischen Strombeaufschlagung des Elektrodenpaars durch eine Person genannt, die hinter der Betäubungsbox steht und ansonsten jeweils ein Schlachttier in die Betäubungsbox treibt.

Die Erfindung und Ausgestaltungen der Erfindung werden im folgenden anhand eines zeichnerisch dargestellten, bevorzugten Ausführungsbeispiels noch näher erläutert. Es zeigt:
- Figur 1: eine Betäubungsbox in Seitenansicht, wobei die Zeichnung so ausgeführt ist, als wenn die rechte Seitenwand der Betäubungsbox durchsichtig wäre;
- Figur 2: eine Ansicht der Betäubungsbox von Fig. 1 von hinten.

Die dargestellte Betäubungsbox 2 hat - ganz grob gesprochen - die Gestalt eines quaderförmigen Kastens, der auf vier Beinen 4 ruht und einen nach oben über den Kasten fortgesetzten Rahmen 6 zur Befestigung diverser, weiter unten noch genauer beschriebener Bauteile aufweist. Die beiden Seitenwände 8, von denen eine oder beide durchsichtig - beispielsweise aus Kunstsstoff - gebaut sein können, haben innenseitig einen nach unten weiter zusammenlaufenden Wandverlauf. Außenseitig sind die Seitenwände 8 im wesentlichen vertikal und eben. Vorne weist die Box 2 einen Vorderbereich 10 auf, der einen weiter unten noch genauer beschriebenen Aufnahmebereich 12 für den Kopf 14 des jeweiligen Schlachttiers 16, im gezeichneten Fall eines Schweines 16 aufweist. Der Innenraum der Box 2 wird durch eine hintere Abschlußwand 18 begrenzt, die weiter noch genauer beschrieben wird. Zu dem Boden 20 der Box führt ein leicht ansteigender Treibgang 22.

Der Kopfaufnahmebereich 12 wird im wesentlichen begrenzt seitlich und oben links und rechts von der Mitte durch Stangen 24 aus rundem Stahlrohr. Die Stangen 24 laufen nach vorn aufeinander zu bzw. im wesentlichen in Richtung auf einen fiktiven Scheitelpunkt. Die obersten Stangen 24 lassen zwischen sich einen Bereich von etwa 30 bis 70 % der Kopfbreite frei und sind hinten zu einem vertikal nach unten führenden Verlauf abgebogen. Diese vertikalen Stangenbereiche befinden sich bei einer durchschnittlichen Schlachttierkopflänge etwa im Bereich der Ohren, so daß dahinter ein noch breiterer Freiraum zum Ansetzen der Betäubungselektroden von oben her frei bleibt. Unten ist der Aufnahmeraum 12 durch ein leicht schräg nach vorn-oben verlaufendes Blech 26 begrenzt, so daß sich eine insgesamt trichterähnliche Konfiguration des Aufnahmeraums 12 ergibt. Die untere Begrenzung des Aufnahmeraums 12 könnte aber auch waagerecht verlaufen. Vorn ist der Aufnahmeraum 12 durch eine vergleichsweise kleine, vertikale Abschlußplatte 28 begrenzt.

Die hintere Abschlußwand 18 ist an Vertikalstangen des Rahmens 6 geführt und läßt sich mittels einer an dem Rahmen 6 angebrachten Zylinder-Kolben-Einheit 30 vertikal ein- und ausfahren. Im nach oben ausgefahrenen Zustand ist der Boxraum für das Schlachttier 16 hinten offen und zugänglich; im nach unten eingefahrenen Zustand reicht die Abschlußwand 18 bis zum Boden 20 der Box 2.

An der Vorderseite der Abschlußwand 18 ist ein Blech befestigt, das schräg nach vorn-aufwärts führt, wodurch eine Schrägfläche 32 gebildet ist. Wenn die Abschlußwand 18 nach unten eingefahren wird, kommt die Schrägfläche 32 mit dem hinteren Ende des Schlachttiers in Kontakt und drängt - bei weiter einfahrender Abschlußwand 18 zunehmend - das Schlachttier 16 ganz nach vorn mit dessen Kopf 14 vollständig in den Aufnahmeraum 12. Die Auslegung ist so getroffen, daß auch die kürzesten, in der Praxis vorkommenden Schlachttiere 16 ganz nach vorn gedrängt und zwischen der Abschlußwand 18 und den Begrenzungen des Aufnahmeraums 12 immobilisiert werden. Bei Schlachttieren 16, die länger als durchschnittlich sind, kann sich ergeben, daß die Abschlußwand 18 nicht ganz vollständig nach unten eingefahren werden kann.

Ein Stück hinter der beschriebenen, ersten Abschlußwand 18 befindet sich eine analog ausgebildete und bewegbare, zweite Abschlußwand 34, wobei deren Schrägfläche aus Übersichtsgründen nicht eingezeichnet ist. Die zweite Abschlußwand 34 wird dann benutzt, wenn ein Schlachttier 16 zu lang für die erste Abschlußwand 18 ist.

Statt der beschriebenen, vertikalen Bewegbarkeit der Abschlußwände 18, 34 könnte beispielsweise auch eine horizontale Bewegbarkeit vorgesehen sein, so daß die Abschlußwände von der Seite her ein- und ausgefahren werden.

Die beschriebene Schrägfläche ist nur eine von mehreren Möglichkeiten zum Nach-vorn-Drängen des Schlachttiers 16. Alternativ könnte man mit schwenkend ein- und ausfahrbaren Abschlußwänden, mit einem aufblasbaren Balg an der Vorderseite der betreffenden Abschlußwand 18 bzw. 34 oder auch mit einem mechanisch nach vorn und hinten verfahrbaren Schieber, z.B. mit einer vertikalen Schlachttierkontaktplatte arbeiten.

Eine noch stärkere Immobilisierung des jeweiligen Schlachttiers 16 ist erreichbar, wenn man das Schlachttier 16 stattdessen oder zusätzlich seitlich einklemmt. Eine erste Möglichkeit hierfür ist eine bewegbare Ausbildung des Boxbodens 20 derart, daß der Boden 20 entweder schwenkend oder translatorisch abwärts absenkbar und aufwärts anhebbar ist. Die schwenkbare Variante ist in Fig. 2 angedeutet. Wenn der Boden 20 abgesenkt wird, nachdem das Schlachttier 16 die Box 2 betreten hat, rutscht das Schlachttier in dem durch die Seitenwande 8 keilartig begrenzten Boxraum nach unten und wird zwischen den Seitenwänden 8 fest eingeklemmt.

Eine weitere, ebenfalls in Fig. 2 angedeutete Möglichkeit besteht darin, innenseitig an einer oder beiden seitenwänden 8 aufblasbare Bälge 36 vorzusehen.

In Fig. 2 erkennt man ferner, daß eine der beiden Seitenwände 8 mittels einer Zylinder-Kolben-Einheit 38 aufwärts und abwärts schwenkbar und dadurch öffenbar und schließbar ist. Beim geöffneten Zustand fällt das betäubte Schlachttier 16 seitlich aus der Box 2 heraus auf eine Rutsche 40. Die Bewegbarkeit der in Fig. 2 rechten Seitenwand 8 gibt eine zusätzliche Möglichkeit der seitlichen Einklemmung des Schlachttiers 16. Wenn man beispielsweise für das Hineintreiben eines zu betäubenden Schlachttiers 16 die Seitenwand 8 nicht ganz schließt und dann, wenn das Schlachttier 16 völlig in der Box 2 ist, die rechte Seitenwand 8 kraftbetätigt stärker schließt, ergibt sich ein gewünschter, seitlicher Einklemmeffekt. Die Zylinder-Kolben-Einheit 38 ist an der beschriebenen, oberen Rahmenverlängerung befestigt. Die Seitenwände 8 reichen auf beiden Seiten außerhalb des Kopfaufnahmeraums 12 bis ganz nach vorn.

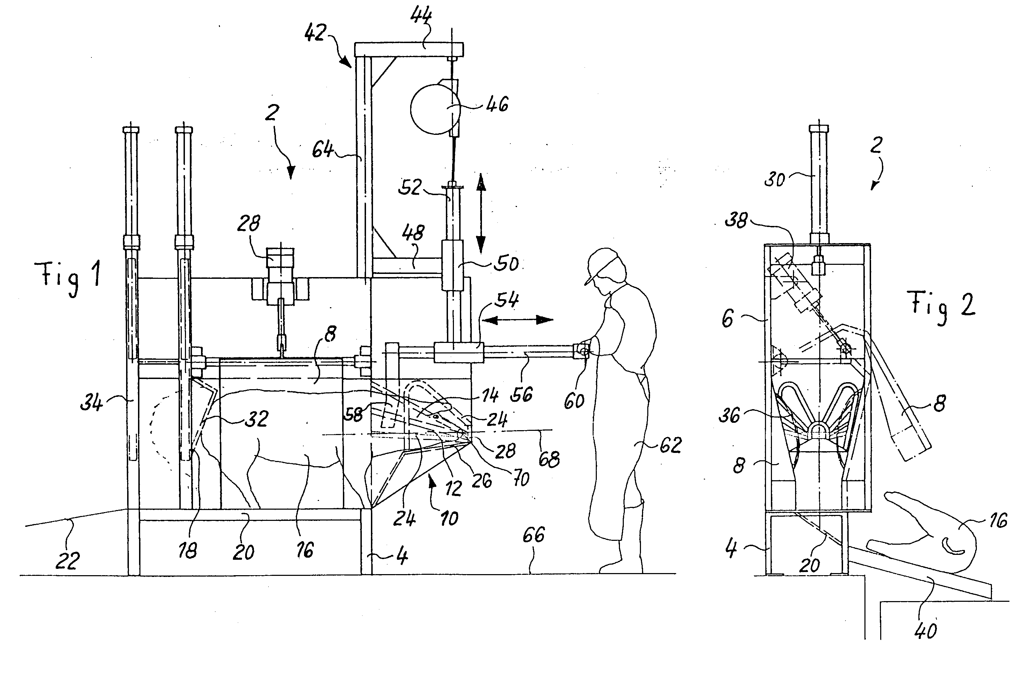

In Fig. 1 erkennt man ferner ein Gestell 42 (das in Fig. 2 aus Übersichtsgründen nicht eingezeichnet ist), das an einem oberen Ausleger 44 einen angehängten Federzug 46 trägt. Ein unterer Ausleger 48 des Gestells 42 weist an seinem Ende eine rohrartige, vertikale Führung 50 auf. In der Führung 50 befindet sich vertikal verschiebbar eine Stange 52, deren oberes Ende an dem Federzug 46 hängt. An der Stange 52 ist unten eine rohrartige horizontale Führung 54 befestigt. In der Führung 54 ist horizontal verschiebbar eine Stange 56 aufgenommen, die an ihrem der Box 2 zugewandten Ende ein nach unten ragendes Elektrodenpaar 58 trägt. Das andere Ende der Stange 56 weist ein Paar von Handgriffen 60 auf, an denen eine Bedienungsperson 62 die Stange 56 und damit das Elektrodenpaar 58 manipulieren kann. Die Stange 56 mit den Bedienungsgriffen 60 stellt ein Handhabungsteil für das Elektrodenpaar 58 dar. Die Stange 56 ist beispielsweise 0,8 bis 1,5 m lang. Die Bedienungsperson 62 kann die Stange 56 in der Führung 54 in Längsrichtung des Schlachttiers 16 und in Vertikalrichtung durch Verschieben der Vertikalstange 52 in deren Führung 50 bewegen. Das Eigengewicht des Elektrodenpaars 58, der Vertikalstange 52, der Horizontalführung 54 und der Horizontalstange 56 ist durch den Federzug 46 im wesentlichen ausgeglichen, so daß die Bedienungsperson 62 das Elektrodenpaar 58 sehr bequem manipulieren und am Kopfbereich des Schlachttiers 16 von oben her ansetzen kann.

Die vertikale Stange 64 des Gestells 42 befindet sich nicht mittig auf der Box 2, sondern - in Fig. 2 gesehen - im Bereich der linken Begrenzung der Box 2. Die Ausleger 44, 48 führen von dort schräg nach vorn zur Mitte der Box 2.

Alternativ kann der Platz der Bedienungsperson 62 seitlich des Schlachttierkopfes 14, am besten gegenüber den Augen des Schlachttiers leicht zurückgesetzt, vorgesehen sein. Es versteht sich, daß in diesem Fall das Gestell 42 entsprechend umgestaltet ist, damit die Bedienungsperson 62 von der Seite her ebenso bequem das Elektrodenpaar 58 manipulieren und ansetzen kann. Eine weitere Alternative besteht darin, die Bedienungsperson 62 nicht auf den Schlachthofboden 66, sondern auf eine nicht eingezeichnete Bühne zu stellen, die den größten Teil des Schlachttierkopfes 14 oben überdeckt. Am hinteren Rand der Bühne vorbei kann die Bedienungsperson 62 das Elektrodenpaar 58 bequem von oben her ansetzen. Statt der beschriebenen, manuell zu bedienenden Anordnung des Elektrodenpaars 58 kann alternativ eine mechanisierte Einrichtung mit einem eigenen Antrieb, beispielsweise in Form einer Zylinder-Kolben-Einheit, vorgesehen sein, die vorzugsweise ebenfalls von oben nach unten arbeitet.

Mit 68 ist ein Lichtschleier angedeutet, der etwa in mittlerer Höhe des Boxraumes liegt, mit waagerechten Lichtstrahlen arbeitet und in Längsrichtung eine Erstreckung hat, die bei vollständig in der Box 2 befindlichem Schlachttier 16 etwa vom Bereich der Vorderbeine des Schlachttiers 16 bis etwas weiter als die Schnauze des Schlachttiers 16 reicht. Durch den Lichtschleier 68 wird erfaßt, wenn die Schnauze 70 des Schlachttiers 16 sich dem Aufnahmeraum 12 nähert und anschließend vollständig in diesen eingetreten ist. Durch eine nicht eingezeichnete Steuerung, die Signale von dem Lichtschleier 68 erhält, kann der Betriebsablauf der Box 2 gesteuert werden, beispielsweise Schließen der Abschlußwand 18, wenn der Schlachttierkopf 14 begonnen hat, in den Aufnahmeraum 12 einzutreten; seitliches Einklemmen, wenn der Kopf 14 vollständig in den Aufnahmeraum 12 eingetreten ist; automatisches Ansetzen des Elektrodenpaares 58 oder Signal für die Bedienungsperson 62, das Elektrodenpaar 58 anzusetzen; Öffnen der Seitenwand 8 zum Auswurf des betäubten Schlachttiers 16.

## Patentansprüche

1. Betäubungsbox (2) für das elektrische Betäuben von Schlachttieren (16), insbesondere Schweinen, aufweisend eine Immobilisierungseinrichtung (8,20;8,36;8,38), mit der sich ein in der Betäubungsbox (2) befindliches Schlachttier (16) durch seitliches Einklemmen immobilisieren läßt, und einen sich verjüngend begrenzten Aufnahmeraum (12) für den Kopf (14) eines in der Betäubungsbox (2) befindlichen Schlachttiers (16)
**dadurch gekennzeichnet,**
daß die Betäubungsbox (2) außerdem eine mechanisierte Vorwärtsdrängeinrichtung (18,32) aufweist, mit der sich ein in der Betäubungsbox (2) befindliches Schlachttier ganz nach vom in die Betäubungsposition drängen läßt, ehe die Immobilisierungseinrichtung betätigt wird.

2. Betäubungsbox (2) nach Anspruch 1,
**dadurch gekennzeichnet,**
daß zur Schaffung der Immobilisierungseinrichtung eine seitliche Begrenzungswand (8) der Betäubungsbox (2) vorgesehen ist, die zum Inneren der Betäubungsbox (2) hin und umgekehrt bewegbar ist.

3. Betäubungsbox (2) nach Anspruch 2,
**dadurch gekennzeichnet,**
daß die seitliche Begrenzungswand (8) schwenkend so weit öffenbar ist, daß das betäubte Schlachttier (16) seitlich aus der Betäubungsbox (2) herauskommt.

4. Betäubungsbox (2) nach Anspruch 2 oder 3,
**gekennzeichnet durch**
eine Zylinder-Kolben-Einheit (38) als Bewegungsantrieb der seitlichen Begrenzungswand (8).

5. Betäubungsbox (2) nach Anspruch 1,
**dadurch gekennzeichnet,**
daß zur Schaffung der Immobilisierungseinrichtung an mindestens einer der seitlichen Begrenzungswände (8) der Betäubungsbox (2) ein mechanischer Schieber oder ein volumenvergrößerharer Balg (36) vorgesehen ist.

6. Betäubungsbox (2) nach Anspruch 1,
**dadurch gekennzeichnet,**
daß zur Schaffung der Immobilisierungseinrichtung seitliche Begrenzungswände (8) der Betäubungsbox (2) vorgesehen sind, die unten einen kleineren gegenseitigen Abstand als oben haben, und daß der Boden (20) der Betäubungsbox (2) schwenkend oder translatorisch absenkbar und abhebbar ist.

7. Betäubungsbox (2) nach einem der Ansprüche 1 bis 6,
**dadurch gekennzeichnet,**
daß zur Schaffung der Vorwärtsdrängeinrichtung eine ein- und ausfahrbare, hintere Abschlußwand (18) der Betäubungsbox (2) vorgesehen ist, die vorderseitig eine Schrägfläche (32) aufweist derart, daß beim Einfahren der Abschlußwand (18) der Innenraum der Betäubungsbox (2) immer weiter verkürzt wird.

8. Betäubungsbox (2) nach einem der Ansprüche 1 bis 6,
**dadurch gekennzeichnet,**
daß zur Schaffung der Vorwärtsdrängeinrichtung eine ein- und ausfahrbare, hintere Abschlußwand (18) der Betäubungsbox (2) und an der Abschlußwand (18) ein mechanischer Schieber oder ein volumenvergrößerbarer Balg vorgesehen sind, mit dem bei Betätigung der Innenraum der Betäubungsbox (2) verkürzbar ist.

9. Betäubungsbox (2) nach Anspruch 7 oder 8,
**dadurch gekennzeichnet,**
daß die Vorwärtsdrängeinrichtung hinter der genannten, ersten Abschlußwand (18) eine zweite, ein- und ausfahrbare Abschlußwand (34) aufweist.

10. Betäubungsbox (2) nach einem der Ansprüche 7 bis 9,
**dadurch gekennzeichnet,**
daß die Abschlußwand (18) (Abschlußwände) durch eine Zylinder-Kolben-Einheit (30) ein- und ausfahrbar ist (sind).

11. Betäubungsbox (2) nach einem der Ansprüche 1 bis 10,
**dadurch gekennzeichnet,**
daß der Aufnahmeraum (12) mindestens oben und seitlich mittels Stangen (24) begrenzt ist.

12. Betäubungsbox (2) nach einem der Ansprüche 1 bis 11,
**dadurch gekennzeichnet,**
daß die Aufnahmeraumbegrenzung den hinteren-oberen Bereich des Schlachttierkopfes (14) frei laßt.

13. Betäubungsbox (2) nach einem der Ansprüche 1 bis 12,
**dadurch gekennzeichnet,**
daß die Arbeitsposition der Bedienungsperson (62) der Betäubungsbox (2) derart vorgesehen ist, daß das Schlachttier (16) die Bedienungsperson (62) zu Beginn des Betäubungsvorgangs im wesentlichen nicht sieht.

14. Betäubungsbox (2) nach Anspruch 12,
**dadurch gekennzeichnet,**
daß die Arbeitsposition der Bedienungsperson (62) auf einer Bühne oberhalb des Schlachttierkopfes (14) oder leicht zurückgesetzt seitlich des Schlachttierkopfes (14) ist.

15. Betäubungsbox (2) nach einem der Ansprüche 1 bis 14,
**dadurch gekennzeichnet,**
daß ein für das elektrische Betäuben vorgesehenes Elektrodenpaar (58) an einem Gestell (42) bewegbar gehaltert ist und mittels eines Handhabungsteils (56) von Hand oder mittels eines Antriebs mit dem Kopfbereich des Schlachttiers (16) in Eingriff bringbar ist.

16. Betäubungsbox (2) nach Anspruch 15,
**dadurch gekennzeichnet,**
daß das Eigengewicht des Elektrodenpaares (58), der zusammen mit dem Elektrodenpaar (58) zu bewegenden Halterungsbauteile und des Handhabungsteils (56) durch einen Federzug (46) im wesentlichen ausgeglichen ist.

17. Betäubungsbox (2) nach einem der Ansprüche 1 bis 16,
**gekennzeichnet durch**
mindestens eine Lichtschranke oder einen Lichtschleier (68) zur Erfassung der jeweiligen Position des Schlachttiers (16) und durch eine Steuerung für den Betriebsablauf der Betäubungsbox (2), wobei die Steuerung auf Signale der Lichtschranke(n) oder des Lichtschleiers (68) anspricht.

## Claims

1. A stunning box (2) for electrically stunning animals (16) to be slaughtered, in particular hogs, comprising an immobilization means (8, 20; 8, 36; 8, 38) by means of which an animal (16) located in the stunning box (2) can be immobilized by laterally squeezing-in the same, and a receiving space (12) confined in tapering manner for receiving the head (14) of an animal (16) located in the stunning box (2),
characterized in
that said stunning box (2) comprises furthermore a mechanized advance-urging means (18, 32) through which an animal (2) located in the stunning box (2) can be urged to the very front, into the stunning position, before said immobilization means is actuated.

2. A stunning box (2) according to claim 1,
characterized in that, for forming said immobilization means, there is provided a lateral confining wall (8) of said stunning box (2), which is movable towards the interior of the stunning box (2) and away therefrom.

3. A stunning box (2) according to claim 2,
characterized in that said lateral confining wall (8) can be pivotally opened to such an extent that the stunned animal (16) to be slaughtered comes out of the stunning box (2) in lateral direction.

4. A stunning box (2) according to claim 2 or 3,
characterized by a piston and cylinder unit (38) as motion drive for moving said lateral confining wall (8).

5. A stunning box (2) according to claim 1,
characterized in that, for forming said immobilization means, a mechanical slide or a bellows (36) of increasable volume is provided on at least one of the lateral confining walls (8) of the stunning box (2).

6. A stunning box (2) according to claim 1,
characterized in that, for forming said immobilization means, lateral confining walls (8) of the stunning box (2) are provided which are spaced apart by a smaller mutual distance at their lower ends than at their tops, and in that the floor (20) of the stunning box (2) is adapted to be lowered and lifted in pivotal or translational manner.

7. A stunning box (2) according to any one of claims 1 to 6,
characterized in that, for forming said advance-urging means, there is provided a rear end wall (18) of the stunning box (2), which is adapted to be moved inwardly and outwardly and which on its front side has an inclined area (32) such that during inward movement of the end wall (18) the interior space of the stunning box (2) is increasingly shortened.

8. A stunning box (2) according to any one of claims 1 to 6,
characterized in that, for forming said advance-urging means, there are provided a rear end wall (18) of the stunning box (2), which is adapted to
be moved inwardly and outwardly, and on said end wall a mechanical slide or a bellows of increasable volume through which the interior space of the stunning box (2) can be shortened upon actuation thereof.

9. A stunning box (2) according to claim 7 or 8,
characterized in that, behind the said first end wall (18), the advance-urging means has a second end wall (34) adapted to be moved inwardly and outwardly.

10. A stunning box (2) according to any one of claims 7 to 9,
characterized in that the end wall (18) (end walls) is (are) adapted to be moved inwardly and outwardly by a piston and cylinder unit (30).

11. A stunning box (2) according to any one of claims 1 to 10,
characterized in that said receiving space (12) is confined by rods (24) at least at the top and laterally.

12. A stunning box (2) according to any one of claims 1 to 11,
characterized in that the receiving space confinement leaves free the rear upper portion of the head (14) of the animal to be slaughtered.

13. A stunning box (2) according to any one of claims 1 to 12,
characterized in that the working position of the operator (62) of the stunning box (2) is provided such that the animal (16) to be slaughtered substantially does not see the operator (62) at the beginning of the stunning operation.

14. A stunning box (2) according to 12,
characterized in that the working position of the operator (62) is on a platform above the head (14) of the animal to be slaughtered or slightly rearwardly from and laterally of the head (14) of the animal to be slaughtered.

15. A stunning box (2) according to any one of claims 1 to 14,
characterized in that an electrode pair (58) provided for electrical stunning is movably supported on a frame (42) and, by means of a manipulating member (56), is adapted to be engaged with the head portion of the animal (16) to be slaughtered manually or by means of a drive.

16. A stunning box (2) according to claim 15,
characterized in that the own weight of the electrode pair (58), of the supporting components to be moved together with the electrode pair (58), and of the manipulating member (56) is substantially balanced by a spring tension means (46).

17. A stunning box (2) according to any one of claims 1 to 16,
characterized by at least one light barrier or a light fog (68) for detecting the particular position of the animal (16) to be slaughtered, and by a control means for the sequence of operation of the stunning box (2), said control means being responsive to signals of said light barrier(s) or light fog (68).

## Revendications

1. Cage de contention pour anesthésie (2) pour anesthésier les animaux de boucherie (16), notamment les porcs, présentant un système d'immobilisation (8, 20 ; 8, 36 ; 8, 38), au moyen duquel un animal de boucherie (16) se trouvant dans la cage d'anesthésie (2) peut être immobilisé par serrage latéral et un espace de réception délimité en se rétrécissant (12) pour la tête (14) d'un animal de boucherie (16) se trouvant dans la cage d'anesthésie (2)
caractérisée en ce que
la cage d'anesthésie (2) présente d'autre part un dispositif de poussée vers l'avant (18, 32) mécanisé, au moyen duquel un animal de boucherie se trouvant dans la cage d'anesthésie (2) peut être poussé entièrement vers l'avant dans la position d'anesthésie avant que le système d'immobilisation ne soit actionné.

2. Cage d'anesthésie (2) selon la revendication 1,
caractérisée en ce que
pour obtenir le système d'immobilisation, il est prévu une paroi de limitation latérale (8) de la cage d'anesthésie (2) qui peut être déplacée vers l'intérieur ou vers l'extérieur de la cage d'anesthésie (2).

3. Cage d'anesthésie (2) selon la revendication 2,
caractérisée en ce que
la paroi de limitation latérale (8) peut s'ouvrir en basculant jusqu'à ce que l'animal de boucherie anesthésié sorte latéralement de la cage d'anesthésie (2).

4. Cage d'anesthésie (2) selon la revendication 2 ou 3,
caractérisée par
une unité piston-cylindre (38) servant d'entraînement au mouvement de la paroi de limitation latérale (8).

5. Cage d'anesthésie (2) selon la revendication 1,
caractérisée en ce que
pour obtenir le système d'immobilisation, un tiroir mécanique ou un sac pouvant augmenter de volume (36) est prévu sur au moins l'une des parois de limitation latérale (8) de la cage d'anesthésie (2).

6. Cage d'anesthésie (2) selon la revendication 1,
caractérisée en ce que
pour obtenir le système d'immobilisation, on prévoit des parois de limitation latérale (8) de la cage d'anesthésie (2) qui ont en bas un écart mutuel plus faible qu'en haut, et en ce que la plancher (20) de la cage d'anesthésie (2) peut être abaissé ou relevé par basculement ou par translation.

7. Cage d'anesthésie (2) selon l'une des revendications 1 à 6,
caractérisée en ce que
pour obtenir le dispositif de poussée vers l'avant, il est prévu une paroi de fermeture arrière (18) de la cage d'anesthésie (2), pouvant être introduite ou retirée, présentant à l'avant une surface oblique (32) de sorte que lorsque la paroi de fermeture arrière (18) est introduite, l'espace intérieur de la cage d'anesthésie (2) se raccourcisse toujours plus.

8. Cage d'anesthésie (2) selon l'une des revendications 1 à 6,
caractérisée en ce que
pour obtenir le dispositif de poussée vers l'avant, il est prévu une paroi de fermeture arrière (18) de la cage d'anesthésie (2), pouvant être introduite ou retirée, et, sur la paroi de fermeture arrière (18), un tiroir mécanique ou un sac pouvant augmenter de volume au moyen duquel l'espace intérieur de la cage d'anesthésie (2) peut être raccourci lorsqu'il est mis en oeuvre.

9. Cage d'anesthésie (2) selon la revendication 7 ou 8,
caractérisée en ce que
le dispositif de poussée vers l'avant présente, derrière ladite première paroi de fermeture (18), une seconde paroi de fermeture (34) pouvant être introduite ou retirée.

10. Cage d'anesthésie (2) selon la revendication 1,
caractérisée en ce que
la paroi de fermeture (18) (les parois de fermeture) est (sont) introduite(s) et retirée(s) par une unité piston-cylindre.

11. Cage d'anesthésie (2) selon l'une des revendications 1 à 10,
caractérisée en ce que,
l'espace de réception (12) est limité au moyen de barreaux (24) au moins en haut et sur le côté.

12. Cage d'anesthésie (2) selon l'une des revendications 1 à 11,
caractérisée en ce que
la limitation de l'espace de réception laisse libre la zone arrière supériéure de la tête (14) de l'animal de boucherie.

13. Cage d'anesthésie (2) selon l'une des revendications 1 à 12,
caractérisée en ce que
la position de travail de la personne de service (62) de la cage d'anesthésie (2) est prévue de telle sorte que l'animal de boucherie (16) ne voit pas réellement la personne de service (62) au début de processus d'anesthésie.

14. Cage d'anesthésie (2) selon la revendication 12,
caractérisée en ce que
la position de travail de la personne de service (62) est située sur une estrade au-dessus de la tête (14) de l'animal de boucherie ou décalée légèrement sur le côté par rapport à la tête (14) de l'animal de boucherie.

15. Cage d'anesthésie (2) selon l'une des revendications 1 à 14,
caractérisée en ce que
une paire d'électrodes (58), prévue pour l'anesthésie électrique, est maintenue mobile sur un bâti (42) et peut être amenée au moyen d'une pièce de manutention (56), à la main ou avec un entraînement, en contact avec la zone de la tête de l'animal de boucherie (16).

16. Cage d'anesthésie (2) selon la revendication 15,
caractérisée en ce que
le poids propre de la paire d'électrodes (58), des parties de support mobiles conjointement avec la paire d'électrodes (58) et de la pièce de manutention (56) est à peu près équilibré par un ressort de traction.

17. Cage d'anesthésie (2) selon l'une des revendications 1 à 16,
caractérisée par
au moins une barrière lumineuse ou un voile lumineux (68) pour appréhender chaque position de l'animal de boucherie (16) et par une commande du processus de fonctionnement de la cage d'anesthésie (2), la commande réagissant à des signaux de la barrière lumineuse ou du voile lumineux (68).
